# EUROPÄISCHE PATENTSCHRIFT

(11) **EP 2 765 698 B1**
(45) Veröffentlichungstag und Bekanntmachung des Hinweises auf die Patenterteilung: **24.10.2018**
(21) Anmeldenummer: 13154201.1
(22) Anmeldetag: 06.02.2013
(51) Int. Cl.: H02M 5/10

(54) **Anordnung zum Zünden von Dünnstäben aus elektrisch leitfähigem Material, insbesondere von Siliziumdünnstäben**
Assembly for igniting thin rods made of electrically conductive material, in particular thin silicon rods
Agencement pour l'allumage de tiges fines à base de matériau conducteur électrique, en particulier de tiges fines de silicium

(43) Veröffentlichungstag der Anmeldung: 13.08.2014
(73) Patentinhaber: Siemens Aktiengesellschaft, 80333 München (DE)
(72) Erfinder: Heid, Günter, 71277 Rutesheim (DE)

(56) Entgegenhaltungen:
- EP-A2- 2 133 983
- US-A- 4 723 104

## Beschreibung

Die Erfindung betrifft eine Schaltungsanordnung zum Zünden von Dünnstäben aus elektrisch leitfähigem Material, mit folgenden Merkmalen:
- ein dreiphasiger Drehstromtransformator mit einer Primärseite und einer Sekundärseite;
- auf der Sekundärseite sind mehrere sekundäre Wicklungssysteme in drei Wicklungssträngen gewickelt, wobei die unterschiedlichen Wicklungssysteme unterschiedlichen Spannungsstufen und die drei Wicklungsstränge den drei Phasen des Drehstromtransformators entsprechen;
- die drei Wicklungsstränge weisen jeweils mehrere Anzapfungen auf; und
- steuerbare Schalter zum Abgreifen der Spannungen an den Anzapfungen der jeweiligen Wicklungsstränge für die Versorgung der Dünnstäbe.

Auch betrifft die Erfindung die Verwendung eines Dreiphasenwechselstromsystems (Drehstromsystem) zum Speisen von Dünnstäben aus elektrisch leitfähigem Material, insbesondere von Siliziumdünnstäben, mit elektrischer Energie.

Eine derartige Schaltungsanordnung, allerdings nur zur Erhitzung der Dünnstäbe, z. B. Siliziumdünnstäbe, ist aus der EP 2 133 983 A2 bekannt. Dort sind die sekundären Wicklungssysteme in den drei Wicklungssträngen als Sternsystem gewickelt. Die Dünnstäbe sind ebenfalls in Sternschaltung verschaltet und über die steuerbaren Schalter (z. B. schaltende Leistungshalbleiter, wie Thyristoren) mit den Anzapfungen der jeweiligen Wicklungsstränge verbunden, so dass die an ihnen liegenden Spannungen wie die Dünnstäbe selbst ein Sternsystem bilden. Die Sternpunkte beider Sternsysteme sind über eine Sternpunktverbindung miteinander verbunden, so dass drei Heizstromkreise bestehend aus den sekundären Wicklungssträngen und den beheizten Dünnstäben gebildet werden. Alternativ zum Sternsystem der Dünnstäbe können die drei Heizstromkreise auch potenzialgetrennt mit drei Einzelstromrückführungen (eine je Phase) ausgeführt werden.

Aus der EP 2 234 259 A1 ist eine Schaltungsanordnung zum Zünden von vier Siliziumdünnstäben in einem Reaktor zum Herstellen von Siliziumstäben aus den Siliziumdünnstäben nach dem Siemens-Verfahren bekannt.

Nach dem bekannten Siemens-Verfahren wird metallurgisches Silizium zunächst mit gasförmigem Chlorwasserstoff bei etwa 600K zu flüssigem Trichlorsilan umgesetzt. In mehreren Destillationsschritten wird das Trichlorsilan gereinigt. Anschließend folgt eine Gasphasenabscheidung. Bei dieser Gasphasenabscheidung wird das Destillat zum Sieden gebracht und in sogenannten Abscheidereaktoren, kurz im Folgenden nur als Reaktoren bezeichnet, über heiße Siliziumdünnstäbe geleitet. An diesen heißen bzw. erwärmten Siliziumdünnstäben wachsen nun Siliziumkristalle, wobei das Trichlorsilan mit Hilfe von Wasserstoff zu Silizium, Chlorwasserstoff und Siliziumtetrachlorid zersetzt wird. Da an den heißen Siliziumdünnstäben an jeder Stelle mit dem (An-)Wachsen begonnen werden kann, sind die gesamten (Dünn-) Stäbe dann nicht monokristallin, sondern bestehen aus mehreren Kristallen (polykristallines Silizium). Nach etwa einer Woche sind die (polykristallinen) Siliziumdünnstäbe auf die gewünschte Größe, d.h. auf die Siliziumstäbe, angewachsen - und werden dem Reaktor entnommen bzw. ausgetauscht.

Die Erwärmung der Siliziumdünnstäbe im Reaktor erfolgt elektrisch, wobei die Siliziumdünnstäbe mit Spannung versorgt bzw. gespeist werden.

Während einer Startphase, d.h. einem Zünden der Siliziumdünnstäbe und einem Hochfahren des Reaktors, werden die Siliziumdünnstäbe mit einer so genannten Mittelspannung versorgt, die größer ist als 2500 V. Mit derartig hohen Spannungen kann dann ein Zünden der Siliziumdünnstäbe erreicht werden.

Sind alle Siliziumdünnstäbe gezündet, d.h. die Startphase ist beendet, folgt eine Betriebsphase, in welcher die Siliziumdünnstäbe mit einer Spannung, welche unterhalb der Spannung in der Startphase liegt, versorgt werden. In der Betriebsphase erfolgt dann das Anwachsen der Siliziumdünnstäbe zu den (polykristallinen) Siliziumstäben.

Die zum Zünden der im Reaktor eingebrachten Siliziumdünnstäbe erforderlichen/verwandten hohen Spannungen würden aufwendige Isolationen bei dem Reaktor zu dessen Abschirmung erfordern. Demzufolge greift man hier auf spezielle Schaltungsanordnungen bei der Spannungsversorgung der Siliziumdünnstabe - mit entsprechend im Reaktor angeordneten und verschalteten Siliziumdünnstäben - zurück.

Diese speziellen Schaltungsanordnungen basieren auf Drehstrom- bzw. Wechselstrom-/-spannungssystemen, welche derart verschaltet sind, dass sich die an die Siliziumdünnstäbe angelegten bzw. von der Schaltungsanordnung den Siliziumdünnstäben zur Verfügung gestellten Spannungen gegeneinander aufheben.

In der EP 2 234 259 A ist eine solche spezielle Schaltungsanordnung beschrieben, mit der vier Siliziumdünnstäbe gezündet werden können. Hierbei wird die dortige Schaltungsanordnung bzw. das dortige Drehstrom-/Wechselspannungssystem derart verschaltet, dass die vier Siliziumdünnstäbe aus jeweils einphasigen Systemen mit zueinander um 180° versetzten Spannungen gespeist werden.

Als nachteilig bei diesen Schaltungsanordnungen erweist sich, dass diese nur geeignet sind, vier (oder ein Vielfaches von vier) bzw. nur eine geradzahlige Anzahl von entsprechend zueinander angeordneten Siliziumdünnstäben zu zünden. D.h., diese Schaltungsanordnungen sind nur unzureichend geeignet, um auch eine von vier (oder ein Vielfaches davon) abweichende Anzahl von entsprechend zueinander angeordneten Siliziumdünnstäben bzw. eine ungeradzahlige Anzahl von entsprechend zueinander angeordneten Siliziumdünnstäben zu zünden.

Aus der US 4 723 104 A ist ein dreiphasiger Drehstromtransformator mit einer Primär- und Sekundärseite bekannt. Auf der Sekundärseite sind mehrere sekundäre Wicklungssysteme in drei Wicklungssträngen als Zickzacksystem gewickelt. Die Spannungen (Spannungsvektoren) zwischen den Wicklungssträngen bilden geschlossenes Dreiecksystem und sich heben sich gegenseitig auf.

Der Erfindung liegt die Aufgabe zugrunde, eine Schaltungsanordnung zum Zünden von Dünnstäben aus elektrisch leitfähigem Material, insbesondere von Siliziumdünnstäben zur Verfügung zu stellen, welche ein Zünden der Dünnstäbe in von vier bzw. geradzahligen Stäben abweichender Anzahl zu ermöglicht.

Die Aufgabe wird erfindungsgemäß dadurch gelöst, dass die Schaltungsanordnung der eingangs genannten Art folgende weiteren Merkmale aufweist:
- die sekundären Wicklungssysteme in den drei Wicklungssträngen sind als Zickzacksystem gewickelt;
- die Dünnstäbe sind über einen dreiphasigen Hilfsdrehstromtransformator oder drei einphasige Hilfstransformatoren zwischen die drei Wicklungsstränge des Drehstromtransformators (geschaltet, wobei der Hilfsdrehstromtransformator oder die Hilfstransformatoren über die steuerbaren Schalter mit den Anzapfungen der jeweiligen Wicklungsstränge verbunden sind, so dass die über die steuerbaren Schalter an die Hilfstransformatoren angelegten Spannungen ein geschlossenes Dreiecksystem bilden und sich gegenseitig aufheben;
- die Dünnstäbe sind in Reihe an eine Wechselstromquelle geschaltet, die die Spannungsversorgung der Dünnstäbe übernimmt, wenn die Dünnstäbe gezündet sind und der Hilfsdrehstromtransformator oder die Hilfstransformatoren über die steuerbaren Schalter von der Sekundärseite des Drehstromtransformators getrennt worden sind.

Bevorzugte Weiterbildungen der Erfindung ergeben sich auch aus den abhängigen Ansprüchen. Die Weiterbildungen beziehen sich sowohl auf die Schaltungsanordnung wie auch die Verwendung.

Die Erfindung und die beschriebenen Weiterbildungen können - auch in Teilen - sowohl in Software als auch in Hardware, beispielsweise unter Verwendung einer speziellen elektrischen Schaltung, realisiert werden.

Die Erfindung sowie deren Ausgestaltung und Vorteile werden nachfolgend anhand von einem Ausführungsbeispiel unter Bezugnahme auf Figuren näher erläutert.

In den Figuren dargestellte Linien (durchgezogen, wie auch gestrichelt) zwischen Elementen kennzeichnen funktionale, logische und/oder physische Verbindungen, wie beispielsweise elektrische Signal- oder Datenleitungen, zwischen den Elementen, über welche Signale, Daten, u. ä. zwischen den Elementen übertragen bzw. ausgetauscht werden können.

Gleiche bzw. funktionsgleiche Bauteile weisen in den Figuren gleiche Bezugszeichen auf.

Es zeigen:
- FIG 1: ein Schaltbild einer Schaltungsanordnung mit einem Drehstromtransformator zum Zünden von Siliziumdünnstäben gemäß einer Ausführungsform der Erfindung,
- FIG 2: ein Zeigerdiagram zu der Schaltungsanordnung nach FIG. 1,
- FIG 3: ein Zeigerdiagram einer die Siliziumdünnstäbe mit Mittelspannung versorgenden Spannungsstufe bei der Schaltungsanordnung nach FIG. 1,
- FIG 4: ein Schaltbild des Drehstromtransformators der Schaltungsanordnung nach FIG. 1 und
- FIG 5: ein Zeigerdiagram zu dem Drehstromtransformator der Schaltungsanordnung nach FIG. 1 bzw. zu dem Schaltbild nach FIG. 4.

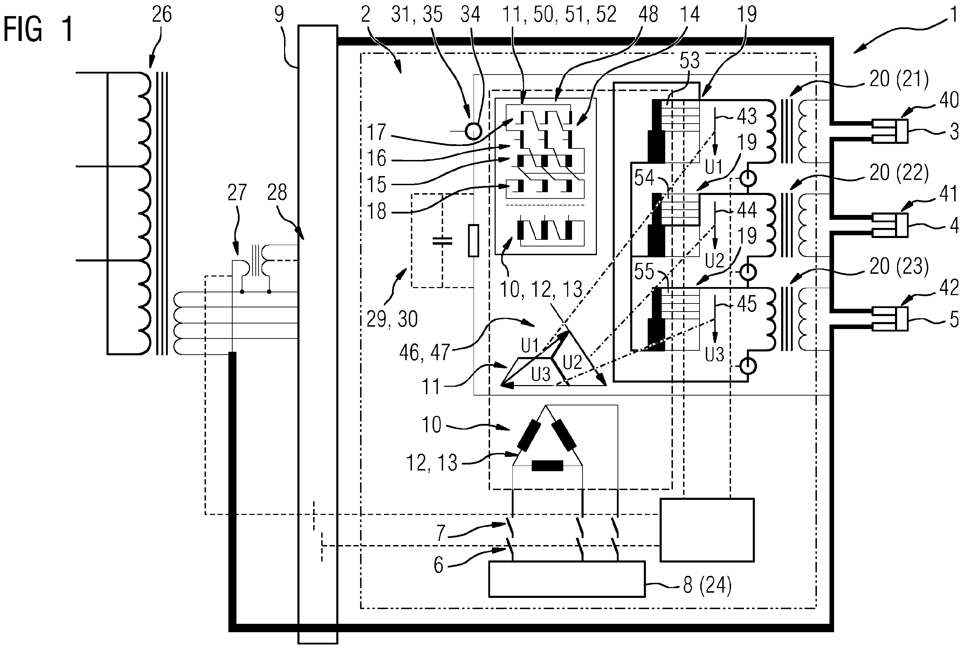

FIG. 1 zeigt ein Schaltbild (Schaltplan) einer Schaltungsanordnung 1 mit einem Drehstromtransformator 2 zum Zünden von hier drei Siliziumdünnstäben 3, 4, 5 in einem hier nicht gezeigten Reaktor zum Herstellen von Siliziumstäben aus den Siliziumdünnstäben nach dem Siemens-Verfahren.

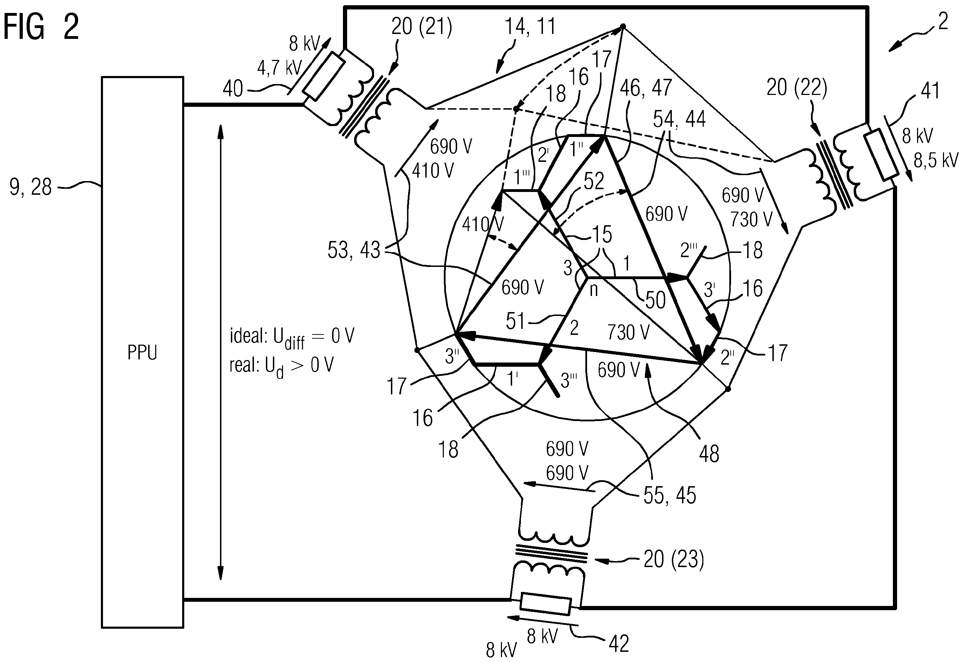

FIG. 2 zeigt das zugehörige Zeigerdiagram der Schaltungsanordnung 1 bzw. des Drehstromtransformators 2 der Schaltungsanordnung 1.

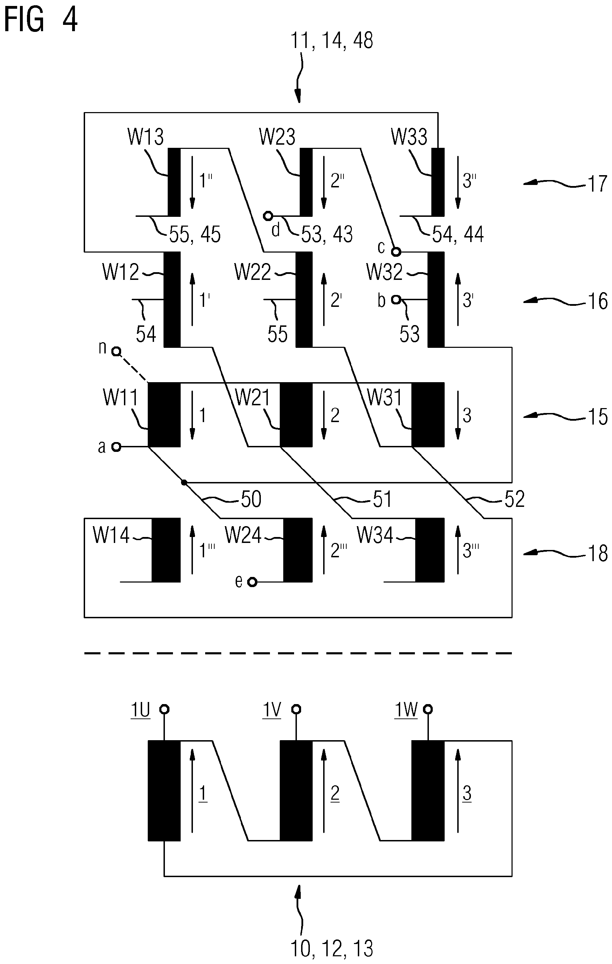

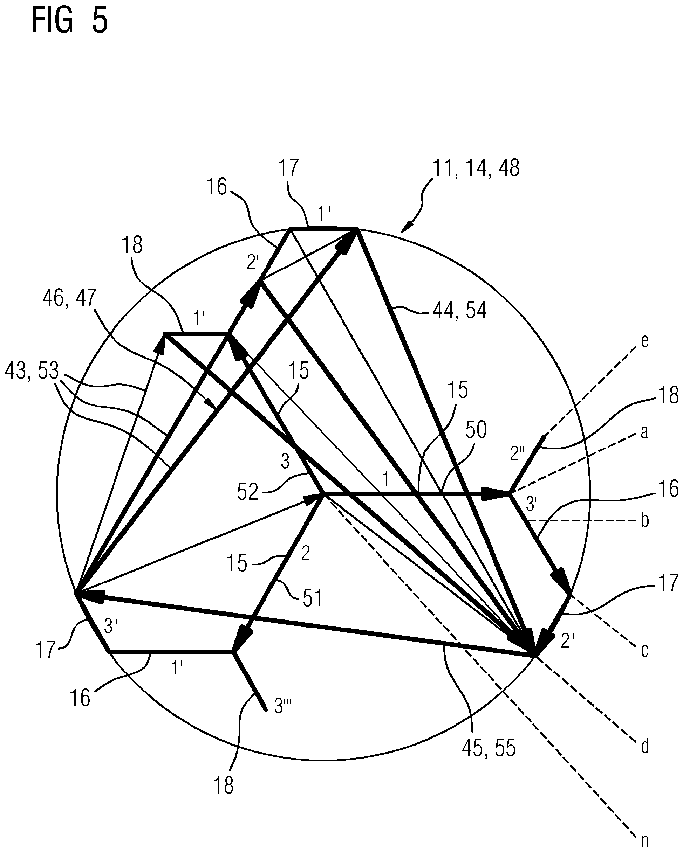

FIG. 4 und FIG. 5 zeigen - mit dortigem Schaltplan bzw. Zeigerdiagramm - den Drehstromtransformator 2 der Schaltungsanordnung 1 nochmals detailliert.

Die Schaltungsanordnung 1 zum Zünden der Siliziumdünnstäbe 3, 4, 5 ist, wie FIG. 1 zeigt, über einen Trennschalter 6 und einen Betriebsschalter 7 mit einem dreiphasigen Spannungsversorgungsnetz 8 (speisendes Netz, hier öffentliches Stromnetz) verbunden, welches die Schaltungsanordnung 1 in einer Startphase mit Drehstrom bzw. Wechselspannung in Höhe von ca. 400kV speist.

Die Schaltungsanordnung 1 dient dazu, die Siliziumdünnstäbe 3, 4, 5 elektrisch zu zünden und den Reaktor, in welchen die Siliziumdünnstäbe 3, 4, 5 in Form von (in diesem Fall) drei Dünnstabpaaren angeordnet sind, hochzufahren (Startphase). Ist diese Startphase beendet, d.h. die Siliziumdünnstäbe 3, 4 5 sind gezündet bzw. der Reaktor ist hochgefahren, wird die Spannungsversorgung der Siliziumdünnstäbe 3, 4, 5 zur Herstellung von polykristallinen Siliziumstäben aus den Siliziumdünnstäben 3, 4, 5 durch eine andere Wechselstromquelle 9, hier als PPU 9 bezeichnet, übernommen (Betriebsphase). Bei der Wechselstromquelle 9 bzw. PPU 9 handelt es sich um einen über einen Haupttransformator 26 in Kombination mit einem Hilfstransformator 27 (durch ein Mittelspannungsnetz (nicht dargestellt) gespeisten einphasigen Wechselstromsteller 9.

Mittels steuerbarer Halbleiterschalter bzw. Thyristoren 28 sind verschiedene Spannungsstufen (Trafostufen) bei dem Hilfstransformator 27 schaltbar, wodurch die PPU 9 in der Lage ist, die Siliziumdünnstäbe 3, 4, 5 in der Betriebsphase mit Wechselspannung gesteuert einstellbar im Bereich von 1kV - 2,5kV zu speisen.

Zum Schutz des einphasigen Wechselstromstellers bzw. der PPU 9 ist bei Speisefrequenzen von 50/60Hz ein Schalter 29 bzw. bei Speisefrequenzen von >>50Hz eine bedämpfende RC-Beschaltung 30, welche bei 50Hz keine Auswirkung hat, vorgesehen.

Zur Versorgung der Siliziumdünnstäbe 3, 4, 5 während der Startphase (Zünden, Hochfahren) speist die Schaltungsanordnung 1 die Siliziumdünnstäbe mit steuerbar einstellbarer Mittelspannung im Bereich von ca. 6kV - 8kV, welche durch gesteuerte "Hochtransformation" der dreiphasigen Netzwechselspannung aus dem dreiphasigen Spannungsversorgungsnetz 8 mittels der Schaltungsanordnung 1 erzeugt und den Siliziumdünnstäben 3, 4, 5 zur Verfügung gestellt wird. In der Betriebsphase werden die Siliziumdünnstäbe 3, 4 5 mit Mittelspannung von bis zu 2,5kV über die PPU 9 gespeist.

Auf der Primärseite 10 weist der dreischenklige Drehstromtransformator 2 eine Dreieckswicklung/-schaltung 12 auf, d.h. die Wicklungen 13 der Primärseite 10 (Primärwicklungen) 13 sind bzw. ist, wie die FIG.en 1, 4, 5 zeigen, derart miteinander verschaltet, dass die Dreiecksschaltung 12 realisiert ist.

Auf der Sekundärseite 11 ist, wie die FIG.en 1, 2, 4, 5 verdeutlichen bzw. zeigen, der Drehstromtransformator 2 als Zickzackschaltung/-wicklung 48 mit einem sekundären Gesamt-Wicklungssystem 14 aus mehreren, sich jeweils in ihren Wicklungsdimensionen (z.B. unterschiedliche Wicklungsquerschnitte) unterscheidenden Wicklungssystemen 15, 16, 17, 18, d.h. einem ersten sekundären Wicklungssystem 15 (erste Spannungs-/Trafostufe), einem zweiten sekundären Wicklungssystem 16 (zweite Spannungs-/Trafostufe), einem dritten sekundären Wicklungssystem 17 (dritte Spannungs-/Trafostufe) und einem vierten sekundären Wicklungssystem 18 (vierte Spannungs-/Trafostufe), gewickelt.

Wie die FIG.en 1, 2, 4 und 5 zeigen, sind bei dem sekundären Wicklungssystem 14 durch entsprechende Verschaltung der vier sekundären Wicklungssysteme 15, 16, 17, 18 drei Wicklungsstränge 50, 51, 52 (entsprechend den drei Phasen) mit jeweils vier Spannungsstufen (entsprechend den vier sekundären Wicklungssystemen 15, 16, 17, 18) realisiert.

Der erste Wicklungsstrang 50 verbindet, wie die FIG.en 1, 2, 4, 5 verdeutlichen, ausgehend vom Sternpunkt n eine Wicklung W11 (Nomenklatur Wxy nach: W: Wicklung; x: Nummer des Schenkels [1 - 3] des dreischenkligen Drehstromtransformators 2; y: Nummer des sekundären Wicklungssystems (Spannungsstufe) [1 - 4]; Durchströmungsrichtungen sind verdeutlicht durch Pfeile x, x', x", x"' (x: Nummer des Schenkels; '/"/"': zweites/drittes/viertes sekundäres Wicklungssystem 16, 17, 18)) des ersten sekundären Wicklungssystems 15 mit einer Wicklung W32 des zweiten sekundären Wicklungssystems 16 und weiter mit einer Wicklung W23 des dritten sekundären Wicklungssystems 17. Eine Wicklung W24 des vierten sekundären Wicklungssystems 18 ist nach der Wicklung W11 (und vor der Wicklung W32) an den ersten Wicklungsstrang 50 geschaltet.

Der zweite Wicklungsstrang 51 führt, wie die FIG.en 1, 2, 4, 5 verdeutlichen, vom Sternpunkt n über eine Wicklung W21 des ersten sekundären Wicklungssystems 15, weiter über eine Wicklung W12 des zweiten sekundären Wicklungssystems 16 zu einer Wicklung W33 des dritten sekundären Wicklungssystems 17. Eine Wicklung W34 des vierten sekundären Wicklungssystems 18 ist nach der Wicklung W21 (und vor der Wicklung W12) an den zweiten Wicklungsstrang 51 geschaltet.

Der dritte Wicklungsstrang 52 verläuft, wie die FIG.en 1, 2, 4, 5 verdeutlichen, vom Sternpunkt n über eine Wicklung W31 des ersten sekundären Wicklungssystems 15, weiter über eine Wicklung W22 des zweiten sekundären Wicklungssystems 16 zu einer Wicklung W13 des dritten sekundären Wicklungssystems 17. Eine Wicklung W14 des vierten sekundären Wicklungssystems 18 ist nach der Wicklung W31 (und vor der Wicklung W22) an den dritten Wicklungsstrang 52 geschaltet.

An mehreren, über elektrische Schalter/Schütze 19 bzw. Thyristoren 19 schaltbare Anzapfungen 53 am ersten Wicklungsstrang 50, Anzapfungen 54 am zweiten Wicklungsstrang 51 und Anzapfungen 55 am dritten Wicklungsstrang 52 sind Anzapfspannungen/Abgabespannungen 43, 44, 45 in unterschiedlicher Spannungshöhe und Phasenlage (einstellbar für einen jeweiligen Zündzustand eines Siliziumstabes 3, 4, 5)) an den Wicklungssträngen 50, 51, 52 abgreifbar.

Das sekundäre Wicklungssystem 14 gewährleistet dabei, wie die FIG. 1, 2, 5 verdeutlichen, dass die an den Wicklungssträngen 50, 51, 52 abgreifbaren Anzapf- oder Abgabespannungen 43 bzw. 44 bzw. 45, d.h. deren Spannungsvektoren 43, 44, 45, ein geschlossenes Dreiecksystem 46 bzw. ein geschlossenes sekundäres Spannungszeigersystem 47 bilden. D.h., der Drehstromtransformator 2 realisiert sekundärseitig 11 ein (vektoriell) geschlossenes sekundäres Spannungszeigersystem 47 bzw. ein (vektoriell) geschlossenes Vektordreieck 46 bei den Abgabespannungen 43, 44, 45.

Das sekundäre Wicklungssystem 14 des Drehstromtransformators 2 stellt abhängig von den Anzapfungen 53, 54, 55 bzw. Spannungsstufen (bestimmt über die Wicklungsdimensionierungen und die Anzahl der sekundären Wicklungssysteme 15, 16, 17, 18) die Abgabespannungen 43, 44, 45) als (Nieder-)Spannungen im Bereich von kleiner 1kV zur Verfügung (die höchste Spannungsstufe des Drehstromtransformators 2 ist kleiner 1kV), die, wie FIG.1 verdeutlicht, mittels eines dreiphasigen Hilfstransformators 20 der Schaltungsanordnung 1 auf die -für eine Zündung notwendige - Siliziumdünnstäbe-Speisespannungen 40, 41, 42 - im Mittelspannungsbereich von ca. 6kV - 8kV - hochtransformiert werden.

Da die Abgabespannungen 43, 44, 45 bzw. deren Spannungsvektoren 43, 44, 45 das (vektoriell) geschlossene sekundäre Spannungszeigersystem 47 bzw. Vektordreieck (Dreiecksystem) 46 bilden, bilden - entsprechend hochtransformiert - auch die Speisespannungen 40, 41, 42 ein solches (vektoriell) geschlossenes sekundäres Spannungszeigersystem 47 bzw. Vektordreieck (Dreiecksystem) 46.

Mit den "sich gegenseitig aufhebenden" Speisespannungen 40, 41, 42 werden die Siliziumdünnstäbe 3, 4, 5 gespeist und dadurch erwärmt und gezündet.

Da das sekundäre Gesamt-Wicklungssystem 14 auf einer Verschaltung von mehreren sekundären Wicklungssystemen 15, 16, 17, 18 basiert, lassen sich Winkelverschiebungen zum treibenden System von ungleich Null herstellen, (ohne dass das (vektoriell) geschlossene sekundäre Spannungszeigersystem 47 bzw. Vektordreieck (Dreiecksystem) 46 geöffnet wird.

Insbesondere durch das vierte sekundäre Wicklungssystem 18, d.h. durch die Wicklungen W14, W24, W34 in den Wicklungssträngen 50, 51, 52, lässt sich durch Umschaltung der Anzapfungen 53, 54, 55 einer (ein einzelner) der Abgabespannungsvektoren 43, 44, 45 und so auch einer der Speisespannungsvektoren 40, 41, 42 derart verstellen, dass sich die zwei anderen Abgabespannungvektoren 43, 44, 45 und so auch die zwei anderen Speisespannungsvektoren 40, 41, 42) in ihrem Betrag nicht oder in für die Aufgabe vorteilhafter Größe verändern, ohne dass das (vektoriell) geschlossene sekundäre Spannungszeigersystem 47 bzw. (vektoriell) geschlossene Vektordreieck (Dreiecksystem) 46 geöffnet wird.

Hat, wie in FIG.en 2, 5 verdeutlicht ist, beim Zündvorgang einer der drei Siliziumdünnstäbe, hier Siliziumdünnstab 3, gezündet, sich erwärmt und dadurch seinen Widerstand entsprechend eines Heißleiters verringert, so kann, um die Aufheizungsgeschwindigkeit dieses gezündeten Siliziumsdünnstabes 3 zu reduzieren, durch Umschaltung der Anzapfung 55 von der Wicklung W13 des dritten sekundären Wicklungssystems 17 auf die Wicklung W14 des vierten sekundären Wicklungssystems 18 im Wicklungsstrang 52 die Abgabespannung 43 an diesem gezündeten Siliziumdünnstab 3 verringert werden (hier von beispielsweise 690V auf 410V) und folglich aufgrund der Hochtransformation durch den Hilfstransformator 20 die Speisespannung 40 verringert werden (hier von 8kV auf 4,7kV), ohne die Abgabespannungen 44, 45 bzw. die Speisespannungen 41, 42 an den noch nicht gezündeten Siliziumdünnstäben 4, 5 zu reduzieren (geringfügige Erhöhung der Abgabespannung 44 von 690V auf 730V bzw. geringfügige Erhöhung der Speisespannung 41 von 8kV auf 8,5kV von Siliziumdünnstab 4; Abgabespannung 45 und Speisespannung 42 von Siliziumdünnstab 5 verbleibt unverändert) und ohne dass das (vektoriell) geschlossene sekundäre Spannungszeigersystem 47 bzw. (vektoriell) geschlossene Vektordreieck (Dreiecksystem) 46 geöffnet wird.

Eine frei programmierbare Steuerung 33 entscheidet auf Basis von Messsignalen über die Zündstrategie, die Abgabespannungen 43, 44, 45, die Speisespannungen 40, 41, 42 und steuert ergebnisbezogen mittels der Halbleiterschalter (Thyristoren) 19 bzw. der Anzapfungen 53, 54, 55 die Schalthandlungen.

So werden beispielsweise die Abgabespannungen 43, 44, 45 bzw. die Speisespannungen 40, 41, 42 der Siliziumdünnstäbe 3, 4, 5 so gesteuert, dass eine möglichst gleichzeitige Zündung und gleichmäßige Erwärmung der Siliziumdünnstäbe 3, 4, 5 gewährleistet ist. Haben die Siliziumdünnstäbe 3, 4, 5 gezündet, werden die Leitungsverbindungen des Drehstromtransformators 2 zum Hilfstransformator 20 getrennt und die Siliziumdünnstäbe über/durch die PPU 9 betrieben/gespeist. Die Abgabespannungen 43, 44, 45 bzw. Speisespannungen 40, 41, 42 können in der Zündphase so gesteuert werden, dass sie für gezündete Siliziumdünnstäbe jeweils reduziert werden, wohingegen sie dann für die nicht gezündeten Siliziumdünnstäbe jeweils konstant gehalten oder leicht erhöht werden.

Zur Erfassung der Messsignale sieht die Schaltungsanordnung 1 Strom- bzw. Spannungserfassungsmittel 34 vor, um den Strom bzw. die Spannung primär- und/oder sekundärseitig bei dem Drehstromtransformator 2 zu erfassen. FIG.1 zeigt beispielhaft solche Strom- bzw. Spannungserfassungsmittel 34 sekundärseitig 11 im sekundären Wicklungssystem 14 des Drehstromtransformators 2.

Bei dem Drehstromtransformator auftretende Unsymmetrien können zu "Ausgleichsspannungen" bzw. "Differenzspannungen" führen, was zu geringfügigen Öffnungen bei dem idealerweise (vektoriell) geschlossenen sekundären Spannungszeigersystem 47 bzw. Vektordreieck 46 führen kann.

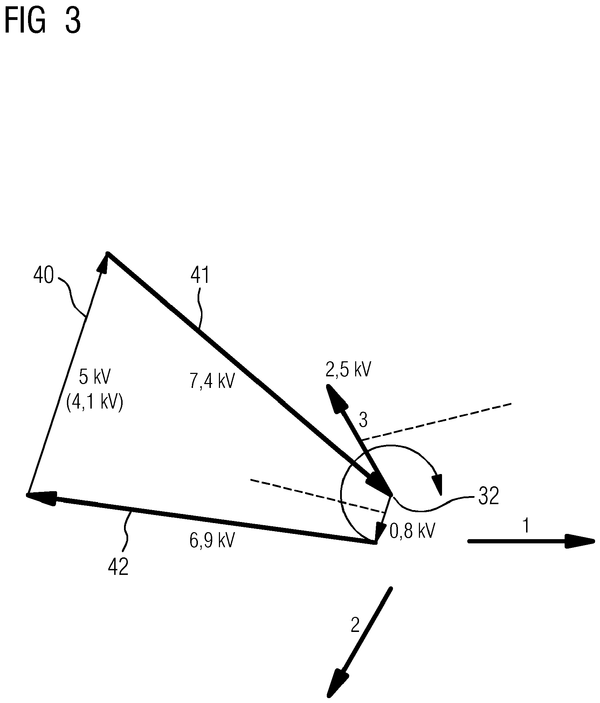

Zur Erfassung solcher durch Unsymmetrien entstehenden "Ausgleichsspannungen"/"Differenzspannungen" (kein geschlossenes Vektordreieck 46 bzw. sekundäres Spannungszeigersystem 47, "Differenzspannung", vgl. FIG. 3) ist eine Differenzstromerfassung mit einem Stromerfassungsmittel 34 mit Hilfe eines Hochspannungswiderstandes 31 vorgesehen.

FIG.3 verdeutlicht diese "Ausgleichsspannung"/"Differenzspannung" beispielhaft - hier dann (bei Trafostufe der PPU 9 von 2,5kV) bei Speisespannungen 40, 41, 42 in Höhe von 4,1kV, 7,4kV, 6,9kV die "Differenzspannung" 32 in Höhe von 0,9kV - für die PPU 9.

## Patentansprüche

1. Schaltungsanordnung (1) zum Zünden von Dünnstäben (3, 4, 5) aus elektrisch leitfähigem Material, mit folgenden Merkmalen:
- ein dreiphasiger Drehstromtransformator (2) mit einer Primärseite (10) und einer Sekundärseite (11);
- auf der Sekundärseite (11) sind mehrere sekundäre Wicklungssysteme (15, 16, 17, 18) in drei Wicklungssträngen (50, 51, 52) gewickelt, wobei die unterschiedlichen Wicklungssysteme (15, 16, 17, 18) unterschiedlichen Spannungsstufen und die drei Wicklungsstränge (50, 51, 52) den drei Phasen des Drehstromtransformators (2) entsprechen;
- die drei Wicklungsstränge (50, 51, 52) weisen jeweils mehrere Anzapfungen (53, 54, 55) auf;
- steuerbare Schalter (19) zum Abgreifen der Spannungen (43, 44, 45) an den Anzapfungen (53, 54, 55) der jeweiligen Wicklungsstränge (50, 51, 52) für die Versorgung der Dünnstäbe (3, 4, 5); wobei
- die sekundären Wicklungssysteme (15, 16, 17, 18) in den drei Wicklungssträngen (50, 51, 52) sind als Zickzacksystem (48) gewickelt;
- die Dünnstäbe (3, 4, 5) sind über einen dreiphasigen Hilfsdrehstromtransformator (20) oder drei einphasige Hilfstransformatoren (21, 22, 23) zwischen die drei Wicklungsstränge (50, 51, 52) des Drehstromtransformators (2) geschaltet, wobei der Hilfsdrehstromtransformator (20) oder die Hilfstransformatoren (21, 22, 23) über die steuerbaren Schalter (19) mit den Anzapfungen (53, 54, 55) der jeweiligen Wicklungsstränge (50, 51, 52) verbunden sind, so dass die über die steuerbaren Schalter (19) an die Hilfstransformatoren (21, 22, 23) angelegten Spannungen (43, 44, 45) ein geschlossenes Dreiecksystem (46) bilden und sich gegenseitig aufheben;
- die Dünnstäbe (3, 4, 5) sind in Reihe an eine Wechselstromquelle (9) geschaltet, die die Spannungsversorgung der Dünnstäbe (3, 4, 5) übernimmt, wenn die Dünnstäbe (3, 4, 5) gezündet sind und der Hilfsdrehstromtransformator (20) oder die Hilfstransformatoren (21, 22, 23) über die steuerbaren Schalter (19) von der Sekundärseite (11) des Drehstromtransformators (2) getrennt worden sind.

2. Schaltungsanordnung (1) nach Anspruch 1, **dadurch gekennzeichnet, dass** die mehreren sekundären Wicklungssysteme (15, 16, 17, 18) unterschiedliche Wickeldimensionierungen aufweisen.

3. Schaltungsanordnung (1) nach Anspruch 1 oder 2, **dadurch gekennzeichnet, dass** die die steuerbaren Schalter (19) Leistungsschütze oder Halbleiterschalter sind.

4. Schaltungsanordnung (1) nach Anspruch 1, 2 oder 3, **gekennzeichnet durch** einen Frequenzumformer (34), welcher zwischen einem speisendem Netz (8) und dem Drehstromtransformator (2) geschaltet ist.

5. Schaltungsanordnung (1) nach einem der Ansprüche 1 bis 4, **dadurch gekennzeichnet, dass** die Dünnstäbe (3, 4, 5) Siliziumdünnstäbe sind.

6. Verwendung eines Dreiphasenwechselstromsystems zum Speisen von Dünnstäben (3, 4, 5) aus elektrisch leitfähigem Material mit elektrischer Energie, bei dem das Drehstromsystem unter Verwendung der Schaltungsanordnung (1) nach einem der Ansprüche1 bis 5 realisiert ist.

## Claims

1. Circuit arrangement (1) for igniting thin rods (3, 4, 5) composed of electrically conductive material, having the following features:
- a three-phase alternating-current transformer (2) having a primary side (10) and a secondary side (11);
- a plurality of secondary winding systems (15, 16, 17, 18) in three winding phases (50, 51, 52) are wound on the secondary side (11), wherein the different winding systems (15, 16, 17, 18) correspond to different voltage levels and the three winding phases (50, 51, 52) correspond to the three phases of the three-phase transformer (2);
- the three winding phases (50, 51, 52) each have a plurality of taps (53, 54, 55);
- controllable switches (19) for tapping the voltages (43, 44, 45) at the taps (53, 54, 55) of the respective winding phases (50, 51, 52) for the supply of power to the thin rods (3, 4, 5) ;
wherein
- the secondary winding systems (15, 16, 17, 18) in the three winding phases (50, 51, 52) are wound as a zigzag system (48);
- the thin rods (3, 4, 5) are connected between the three winding phases (50, 51, 52) of the three-phase transformer (2) by means of a three-phase auxiliary alternating-current transformer (20) or three single-phase auxiliary transformers (21, 22, 23), wherein the auxiliary three-phase transformer (20) or the auxiliary transformers (21, 22, 23) are connected to the taps (53, 54, 55) of the respective winding phases (50, 51, 52) by means of the controllable switches (19) so that the voltages (43, 44, 45) applied to the auxiliary transformers (21, 22, 23) by means of the controllable switches (19) form a closed triangle system (46) and cancel each other out;
- the thin rods (3, 4, 5) are connected in series with an AC source (9), which takes over the supply of voltage to the thin rods (3, 4, 5) when the thin rods (3, 4, 5) are ignited and the auxiliary three-phase transformer (20) or the auxiliary transformers (21, 22, 23) have been isolated from the secondary side (11) of the three-phase transformer (2) by means of the controllable switches (19).

2. Circuit arrangement (1) according to Claim 1, **characterized in that** the plurality of secondary winding systems (15, 16, 17, 18) have different winding dimensions.

3. Circuit arrangement (1) according to Claim 1 or 2, **characterized in that** the controllable switches (19) are power contactors or semiconductor switches.

4. Circuit arrangement (1) according to Claim 1, 2, or 3, **characterized by** a frequency transformer (34), which is connected between a feeding network (8) and the three-phase transformer (2).

5. Circuit arrangement (1) according to one of Claims 1 to 4, **characterized in that** the thin rods (3, 4, 5) are thin silicon rods.

6. Use of a three-phase alternating-current system for feeding electrical energy to thin rods (3, 4, 5) composed of an electrically conductive material, in which the three-phase system is realized using the circuit arrangement (1) according to one of Claims 1 to 5.

## Revendications

1. Montage (1) pour l'amorçage de tiges (3, 4, 5) minces en matériau conducteur de l'électricité, ayant les caractéristiques suivantes :
- un transformateur (2) triphasé, ayant un côté (10) primaire et un côté (11) secondaire;
- du côté (11) secondaire, sont enroulés plusieurs systèmes (15, 16, 17, 18) d'enroulement secondaires en trois branches (50, 51, 52) d'enroulement, les systèmes (15, 16, 17, 18) d'enroulement différents correspondant à des étages de tension différents et les trois branches (50, 51, 52) d'enroulement, aux trois phases du transformateur (2) triphasé;
- les trois branches (50, 51, 52) d'enroulement ont respectivement plusieurs prises (53, 54, 55);
- des interrupteurs (19) pouvant être commandés pour prélever les tensions (43, 44, 45) sur les prises (53, 54, 55) des branches (50, 51, 52) d'enroulement respectives, afin d'alimenter les tiges (3, 4, 5) minces;
dans lequel
- les systèmes (15, 16, 17, 18) d'enroulement secondaires, dans les trois branches (50, 51, 52) d'enroulement, sont enroulés en système zigzag;
- les tiges (3, 4, 5) minces sont montées par un transformateur (20) triphasé auxiliaire ou par trois transformateurs (21, 22, 23) auxiliaires monophasés entre les trois branches (50, 51, 52) d'enroulement du transformateur (2) triphasé, le transformateur (20) triphasé auxiliaire ou les transformateurs (21, 22, 23) auxiliaires étant reliés par les interrupteurs (19) pouvant être commandés aux prises (53, 54, 55) des branches (50, 51, 52) d'enroulement respectives, de manière à ce que les tensions (43, 44, 45), appliquées par les interrupteurs (19) pouvant être commandés aux transformateurs (21, 22, 23) auxiliaires, forment un système (46) triangulaire fermé et se compensent mutuellement;
- les tiges (3, 4, 5) minces sont montées en série avec une source (9) de tension alternative, qui prend en charge l'alimentation en tension des tiges (3, 4, 5) minces, lorsque les tiges (3, 4, 5) minces sont amorcées et le transformateur (20) triphasé auxiliaire ou les transformateurs (21, 22, 23) auxiliaires sont séparés par les interrupteurs (19) pouvant être commandés du côté (11) secondaire du transformateur (2) triphasé.

2. Montage (1) suivant la revendication 1, **caractérisé en ce que** les plusieurs systèmes (15, 16, 17, 18) d'enroulement secondaires ont des dimensions d'enroulement différentes.

3. Montage (1) suivant la revendication 1 ou 2, **caractérisé en ce que** les interrupteurs (19) pouvant être commandés sont des dispositifs de protection de puissance ou des interrupteurs à semi-conducteur.

4. Montage (1) suivant la revendication 1, 2 ou 3, **caractérisé par** un convertisseur (34) de fréquence, monté entre un réseau (8) d'alimentation et le transformateur (2) triphasé.

5. Montage (1) suivant l'une des revendication 1 à 4, **caractérisé en ce que** les tiges (3, 4, 5) minces sont des tiges minces en silicium.

6. Utilisation d'un système de courant alternatif triphasé pour alimenter en énergie électrique des tiges (3, 4, 5) minces en matériau conducteur de l'électricité, dans lequel le système triphasé est réalisé en utilisant le montage (1) suivant l'une des revendications 1 à 5.
